# EUROPEAN PATENT APPLICATION

(11) **EP 4 357 436 A1**
(43) Date of publication of application: **24.04.2024**
(21) Application number: 22824968.6
(22) Date of filing: 13.06.2022
(51) Int. Cl.: C09K 5/06

(54) **COLD STORAGE MATERIAL**

(30) Priority: 14.06.2021 JP 2021098487
(71) Applicant: Panasonic Holdings Corporation, Osaka 571-8501 (JP)
(72) Inventor: MACHIDA, Hironobu, Kadoma-shi, Osaka 571-0057 (JP)
(74) Representative: Grünecker Patent- und Rechtsanwälte PartG mbB
(86) International application number: PCT/JP2022/023697
(87) International publication number: WO 2022/264979

(57) **Abstract**

A cold storage material according to the present disclosure includes: tetrahydrofuran; water; and a halogenated hydrocarbon, wherein the halogenated hydrocarbon includes a fluorine atom, the fluorine atom is largest in number among halogen atoms in the halogenated hydrocarbon, the number of carbon atoms in the halogenated hydrocarbon is 3 or more and 8 or less, a weight proportion of the halogenated hydrocarbon in the cold storage material is 15% or less, and the halogenated hydrocarbon has a boiling point of 60 degrees Celsius or lower.

## Description

### TECHNICAL FIELD

The present invention relates to a cold storage material.

### BACKGROUND ART

Patent Literature 1 discloses a heat storage member capable of extinguishing fires by suppressing combustion of a latent heat storage material, a storage container including the heat storage member, and a building including the heat storage member.

### CITATION LIST

### Patent Literature

Patent Literature 1: WO 2012/147677 A1

### SUMMARY OF INVENTION

### Technical Problem

The present disclosure aims to provide a cold storage material including tetrahydrofuran and water, the cold storage material being configured to be used safely for storage, keeping, and transportation. Specifically, the present disclosure aims to provide a cold storage material having low inflammability.

### Solution to Problem

A cold storage material according to the present disclosure includes:
tetrahydrofuran;
water; and
a halogenated hydrocarbon, wherein
the halogenated hydrocarbon includes a fluorine atom,
the fluorine atom is largest in number among halogen atoms in the halogenated hydrocarbon,
the number of carbon atoms in the halogenated hydrocarbon is 3 or more and 8 or less,
a weight proportion of the halogenated hydrocarbon in the cold storage material is 15% or less, and
the halogenated hydrocarbon has a boiling point of 60 degrees Celsius or lower.

### Advantageous Effects of Invention

The present disclosure provides a cold storage material including tetrahydrofuran and water, the cold storage material being configured to be used safely for storage, keeping, and transportation. Specifically, the present disclosure provides a cold storage material having low inflammability.

### BRIEF DESCRIPTION OF DRAWINGS

FIG. 1 is a graph showing properties of a cold storage material during cold storage.
FIG. 2 is a graph showing properties of a cold storage material during cold releasing.
FIG. 3 shows a schematic diagram of a cooler box 100 according to a first embodiment.

### DESCRIPTION OF EMBODIMENTS

Embodiments of the present invention will be described hereinafter with reference to the drawings.

### (First embodiment)

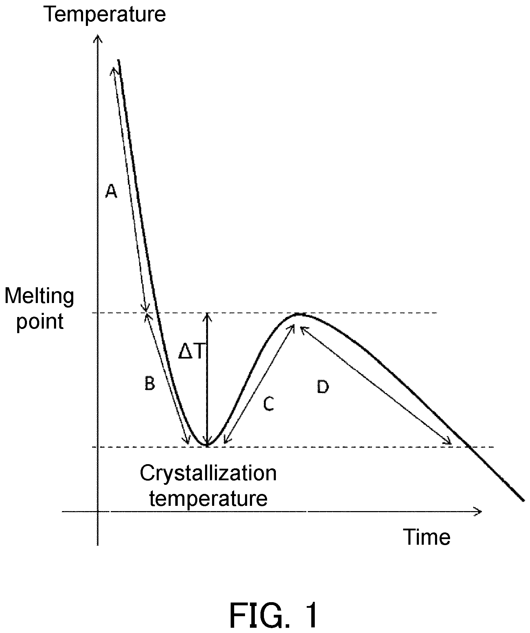

FIG. 1 is a graph showing properties of a cold storage material during cooling. In FIG. 1, the horizontal axis and the vertical axis respectively represent time and temperature.

A cold storage material according to a first embodiment is cooled. Refer to a zone A shown in FIG. 1. Unlike common liquids, as is well known in the technical field of cold storage materials, the cold storage material does not solidify and becomes a supercooling state even when the temperature of the cold storage material reaches its melting point by cooling. Refer to a zone B shown in FIG. 1. The cold storage material is liquid in the supercooling state.

Next, the cold storage material starts crystallizing spontaneously. In the course of the crystallization, the cold storage material discharges crystallization heat being an approximate equivalent to latent heat. Consequently, the temperature of the cold storage material starts rising. Refer to a zone C shown in FIG. 1. Herein, a temperature at which a cold storage material starts crystallizing spontaneously is called "crystallization temperature".

The crystallization turns the cold storage material according to the first embodiment into a semiclathrate hydrate. A clathrate hydrate refers to a crystal including a cage-like crystal made of hydrogen-bonded water molecules and a substance other than water, the substance being surrounded by the cage-like crystal. A semiclathrate hydrate refers to a crystal formed by a guest molecule's participation in a hydrogen bond network of water molecules. A concentration at which water molecules and a guest molecule form a hydrate with no excess nor shortage of the molecules is called a congruent concentration. Generally, a hydrate is often used around the congruent concentration.

The symbol ΔT in FIG. 1 represents a difference between the melting point and the crystallization temperature of the cold storage material. The difference ΔT can also be called "degree of supercooling". The crystallization of the cold storage material in the supercooling state turns the cold storage material into a semiclathrate hydrate (for example, refer to Patent Literature 1).

After the zone C, the temperature of the cold storage material gradually decreases to be equal to an ambient temperature. Refer to a zone D shown in FIG. 1.

In FIG. 1, the cold storage material is cooled to a temperature lower than the crystallization temperature. However, the cold storage material may be maintained in the temperature range from the melting point to the crystallization temperature.

The crystallization temperature is lower than the melting point of the cold storage material. The melting point of the cold storage material can be measured using, as is well known in the technical field of cold storage materials, a differential scanning calorimeter (which can be called "DSC").

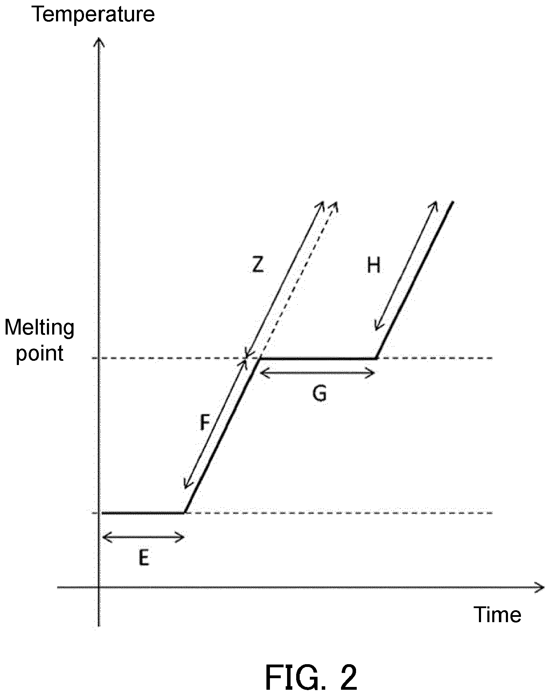

FIG. 2 is a graph showing properties of the cold storage material during warming. In FIG. 2, the horizontal axis and the vertical axis respectively represent time and temperature. During a zone E, the temperature of the cold storage material is maintained at a temperature equal to or lower than the melting point of the cold storage material. For example, the temperature inside a cooler box is set at a temperature equal to or lower than the melting point of the cold storage material so that the temperature of the cold storage material placed inside the cooler box can be maintained at a temperature equal to or lower than the melting point of the cold storage material while a lid of the cooler box is closed. During the zone E, the temperature of the cold storage material may be maintained at a temperature equal to or lower than its crystallization temperature.

Subsequently, the cold storage material gradually is warmed. Refer to a zone F shown in FIG. 2. For example, the temperature inside the cooler box gradually rises by opening the lid of the cooler box (or by opening the lid and putting food inside) at the end of the zone E (namely, at the beginning of the zone F).

Reaching the melting point of the cold storage material, the temperature of the cold storage material is maintained around the melting point of the cold storage material. Refer to a zone G shown in FIG. 2. Without the cold storage material, the temperature inside the cooler box would continuously rise as shown in a zone Z in FIG. 2. On the other hand, with the cold storage material, the temperature inside the cooler box is maintained around the melting point of the cold storage material during a certain period of time, namely, the zone G. The cold storage material thus exhibits its cold storage effect. At the end of the zone G, the crystal of the cold storage material melts and disappears. The cold storage material consequently liquefies.

After that, the temperature of the liquefied cold storage material rises to be equal to the ambient temperature. Refer to a zone H shown in FIG. 2.

The cold storage material can be cooled and reused.

A cold storage material including tetrahydrofuran needs to satisfy the following requirements (I) and (II) so as to be suitably included in a cooler box that can contain medicine or food.
Requirement (I) The cold storage material has low inflammability.
Requirement (II) The cold storage material has a latent heat of more than 200 J/g.

The requirement (I) needs to be satisfied because the cold storage material is required to have low inflammability to enhance the safety of the cold storage material for storage, keeping, and transportation, in the light of a low flash point, namely, approximately minus 20 degrees Celsius, of tetrahydrofuran.

The requirement (II) needs to be satisfied so that the cold storage material will be more competitive among cold storage materials. For example, n-tetradecane having a comparable melting point has a latent heat of 175 J/g. The cold storage material according to the first embodiment desirably has a latent heat of 210 J/g or more. The cold storage material according to the first embodiment more desirably has a latent heat of 213 J/g or more. The cold storage material according to the first embodiment even more desirably has a latent heat of 220 J/g or more.

In this technical field, latent heat is also called heat of fusion.

In order to avoid confusion, "kelvin" is used herein for the degree of supercooling ΔT. The present inventor writes, for example, as follows: "the degree of supercooling ΔT is n kelvins or lower". Needless to say, n represents a real number. The description "the degree of supercooling ΔT ≤ 5 kelvins" means that a difference between the crystallization temperature and the melting point of a cold storage material is 5 kelvins or lower. On the other hand, "degree Celsius" is used herein for temperature. The present inventor writes, for example, as follows: "the crystallization temperature is 5 degrees Celsius (namely, 5°C)".

The cold storage material according to the first embodiment includes tetrahydrofuran, water, and a halogenated hydrocarbon. The halogenated hydrocarbon includes a fluorine atom. If the halogenated hydrocarbon included no fluorine atoms, the halogenated hydrocarbon would include chlorine, bromine, or iodine and thus harm and toxicity to the human body and the environment would be a matter of concern.

The fluorine atom is largest in number among halogen atoms in the halogenated hydrocarbon. If a chlorine atom, a bromine atom, or an iodine atom was largest in number among the halogen atoms in the halogenated hydrocarbon, harm and toxicity to the human body and the environment would be a matter of concern.

The number of carbon atoms in the halogenated hydrocarbon is 3 or more and 8 or less. If the number of carbon atoms in the halogenated hydrocarbon was less than 3, the molecular weight of the halogenated hydrocarbon would be small, so that the vapor pressure of the halogenated hydrocarbon would increase and the halogenated hydrocarbon would become a gas at ordinary temperature. A container for a heat storage material including such a halogenated hydrocarbon would have to be pressure resistant, and the use of a general-use resin container would be inappropriate. If the number of carbon atoms in the halogenated hydrocarbon was more than 8, the molecular weight of the halogenated hydrocarbon would be large, so that the vapor pressure and an anti-combustion effect would decrease. The anti-combustion effect includes (i) a suffocation effect in which oxygen is diluted as a result of volatilization of a fluorine-based solvent, and (ii) a negative catalyst effect in which a halogen element in a volatilized fluorine-based solvent interrupts the cycle of combustion involving a radical reaction (by radical trapping). That is, when the number of carbon atoms in the halogenated hydrocarbon is more than 8 and the molecular weight of the halogenated hydrocarbon increases, the two types of anti-combustion effect, namely, the suffocation effect and the negative catalyst effect, are reduced.

The halogenated hydrocarbon concentration is 15 weight% or less in the cold storage material. In other words, a weight proportion of the halogenated hydrocarbon in the entire cold storage material is 15% or less. The term "weight proportion" herein means a weight proportion of a halogenated hydrocarbon in a cold storage material (i.e., the entire cold storage material), unless otherwise specified. The latent heat tends to decrease when the weight proportion is more than 15%. It should be noted that the halogenated hydrocarbon is much more expensive than tetrahydrofuran and water. The weight proportion is desirably 12.5% or less from the viewpoint of the latent heat and cost. The weight proportion is more desirably 10% or less.

The halogenated hydrocarbon concentration is desirably 3 weight% or more in the cold storage material. In other words, the weight proportion of the halogenated hydrocarbon in the entire cold storage material is desirably 3% or more. When the weight proportion is 3% or more, an anti-fire-catching effect achieved by the addition of the halogenated hydrocarbon is more likely to be achieved. The weight proportion is more desirably 5% or more to increase the anti-fire-catching effect.

As is obvious from the above description on the weight proportion, the weight proportion of the halogenated hydrocarbon is desirably 3% or more and 15% or less, more desirably 5% or more and 15% or less, and even more desirably 5% or more and 10% or less.

The halogenated hydrocarbon has a boiling point of 60 degrees Celsius or lower. The halogenated hydrocarbon desirably has a boiling point of 54 degrees Celsius or lower. The halogenated hydrocarbon even more desirably has a boiling point of 39 degrees Celsius or lower. In one example, The halogenated hydrocarbon has a boiling point of 0 degrees Celsius or higher. The halogenated hydrocarbon desirably has a boiling point of 33 degrees Celsius or higher.

As demonstrated by later-described Comparative Examples 1 to 15, if a halogenated hydrocarbon having a boiling point higher than 60 degrees Celsius was included in the cold storage material, the halogenated hydrocarbon concentration in the cold storage material would need to be high, e.g., 35 weight%, to achieve the anti-fire-catching effect sufficiently.

From the viewpoint of the weight proportion and the boiling point, an advantage of (Z)-1,1,1,4,4,4-hexafluorobut-2-ene (Example 2A to Example 2D) over 1,1,2,2,3,3,4-heptafluorocyclopentane (refer to Comparative Examples 3, 13, and 14) will be hereinafter described as an example.

(Z)-1,1,1,4,4,4-Hexafluorobut-2-ene has a boiling point of 33 degrees Celsius. As demonstrated by later-described Example 2Ato Example 2D, (Z)-1,1,1,4,4,4-hexafluorobut-2-ene exhibits the anti-fire-catching effect when the (Z)-1,1,1,4,4,4-hexafluorobut-2-ene concentration is 2.5 weight% or more and 15 weight% or less (specifically, 2.97 weight% or more and 15 weight% or less). Specifically, in an inflammability test in the temperature range from 10 degrees Celsius to 130 degrees Celsius, the inflammability of a cold storage material in which the (Z)-1,1,1,4,4,4-hexafluorobut-2-ene concentration is 2.5 weight% or more and 15 weight% or less (specifically, 2.97 weight% or more and 15 weight% or less) is expressed by 2/20 (= 10%) or less.

As demonstrated by later-described Example 2A, Example 2B, and Example 2D, (Z)-1,1,1,4,4,4-hexafluorobut-2-ene greatly exhibits the anti-fire-catching effect when the (Z)-1,1,1,4,4,4-hexafluorobut-2-ene concentration is 4.5 weight% or more and 15 weight% or less (specifically, 4.95 weight% or more and 15 weight% or less). Specifically, in the above inflammability test, the inflammability of a cold storage material in which the (Z)-1,1,1,4,4,4-hexafluorobut-2-ene concentration is 4.5 weight% or more and 15 weight% or less (specifically, 4.95 weight% or more and 15 weight% or less) is expressed by 0/20 (= 0%) (in other words, totally non-inflammable). As described above, when (Z)-1,1,1,4,4,4-hexafluorobut-2-ene is included in the cold storage material, the anti-fire-catching effect can be exhibited at a low concentration, namely 15 weight% or less.

On the other hand, 1,1,2,2,3,3,4-heptafluorocyclopentane has a boiling point of 83 degrees Celsius. As demonstrated by later-described Comparative Example 14, 1,1,2,2,3,3,4-heptafluorocyclopentane does not sufficiently exhibit the anti-fire-catching effect when the concentration is 25 weight%. Specifically, in the above inflammability test, a cold storage material in which the 1,1,2,2,3,3,4-heptafluorocyclopentane concentration is 25 weight% has a high inflammability expressed by 5/20 (= 25%). Therefore, when 1,1,2,2,3,3,4-heptafluorocyclopentane is included, a high 1,1,2,2,3,3,4-heptafluorocyclopentane concentration, namely 30 weight% or more, is required to sufficiently exhibit the anti-fire-catching effect (in other words, to decrease the above inflammability), as demonstrated by later-described Comparative Examples 3 and 13.

Herein, as can be understood from later-described Examples, Reference Examples, and Comparative Examples, the inflammability is low in the case of 3/20 (= 15%) or less, while the inflammability is high in the case of 4/20 (= 20%) or more.

As described above, a high halogenated hydrocarbon concentration, namely, a large weight proportion (e.g., a weight proportion over 20 weight%) causes a disadvantage from the viewpoint of the latent heat and cost.

The halogenated hydrocarbon may be a halogenated unsaturated hydrocarbon.

Examples of the halogenated hydrocarbon suitably used for the cold storage material according to the first embodiment are (1) to (3) listed below.
(1) 1-Chloro-2,3,3-trifluoropropene (in one example, a mixture of (E)-1-chloro-2,3,3-trifluoropropene and (Z)-1-chloro-2,3,3-trifluoropropene; boiling point of the mixture: 54 degrees Celsius)
(2) (Z)-1,1,1,4,4,4-Hexafluorobut-2-ene (boiling point: 33 degrees Celsius)
(3) (Z)-1-Chloro-3,3,3-trifluoropropene (boiling point: 39 degrees Celsius)

The cold storage material may include two or more halogenated hydrocarbons as the halogenated hydrocarbon. In other words, the halogenated hydrocarbon may be a mixture of two or more halogenated hydrocarbons. In one example, the cold storage material may include, as described above, the mixture of (E)-1-chloro-2,3,3-trifluoropropene and (Z)-1-chloro-2,3,3-trifluoropropene as the halogenated hydrocarbon. The mixture has a boiling point of 54 degrees Celsius.

The term "boiling point" herein refers to a boiling point at one atmospheric pressure (namely, 101325 Pa) or one bar (namely, 100000 Pa), as in general usage. Boiling points are generally shown in catalogs distributed by reagent suppliers.

An example of how the cold storage material according to the first embodiment achieves its low inflammability will be described hereinafter, although the present inventor does not want theory to bind the invention. By warming the cold storage material according to the first embodiment, the halogenated hydrocarbon evaporates simultaneously with evaporation of the tetrahydrofuran into a space (particularly into an enclosed space). Consequently, the suffocation effect by which oxygen in the space (particularly in the enclosed space) is diluted can be achieved and the negative catalyst effect by which the cycle of combustion is interrupted is exhibited. The cold storage material according to the first embodiment thus has low inflammability. In one example, the cold storage material according to the first embodiment has low inflammability in an environment where an ambient temperature of the cold storage material is 10 degrees Celsius or higher and 130 degrees Celsius or lower. This allows the cold storage material according to the first embodiment to be used safely for storage, keeping, and transportation.

As demonstrated by later-described Example 1A-1 to Example 3D, the cold storage material according to the first embodiment has a melting point of minus 10 degrees Celsius or higher and 10 degrees Celsius or lower. The cold storage material according to the first embodiment desirably has a melting point of minus 5 degrees Celsius or higher and 8 degrees Celsius or lower. The cold storage material according to the first embodiment more desirably has a melting point of 0 degrees Celsius or higher and 6 degrees Celsius or lower. In one example, the cold storage material according to the first embodiment has a melting point of 5 degrees Celsius.

As demonstrated by later-described Example 1A-1 to Example 3D, the cold storage material according to the first embodiment can have a crystallization temperature of minus 30 degrees Celsius or higher and minus 10 degrees Celsius or lower. In one example, the cold storage material according to the first embodiment can have a crystallization temperature of minus 25 degrees Celsius or higher and minus 15 degrees Celsius or lower. Specifically, the cold storage material according to the first embodiment may have a crystallization temperature of minus 20 degrees Celsius. In other words, the cold storage material according to the first embodiment can be cooled to a low temperature equal to or lower than minus 20 degrees Celsius and crystalized. Needless to say, after the crystallization of the cold storage material according to the first embodiment, the cold storage material according to the first embodiment may be warmed a little. In one example, in the case of using the cold storage material according to the first embodiment for keeping cold a vaccine whose ambient temperature needs to be maintained in the range of 2 degrees Celsius or higher to 8 degrees Celsius or lower, the cold storage material according to the first embodiment is cooled to a low temperature equal to or lower than minus 20 degrees Celsius and crystallized and is then appropriately warmed a little for an ambient temperature of 2 degrees Celsius or higher and 8 degrees Celsius or lower. After that, the cold storage material according to the first embodiment is used to keep the vaccine cold while the cold storage material is maintained at a temperature equal to or lower than its melting point.

In the cold storage material according to the first embodiment, a molar ratio of the tetrahydrofuran to the water is not limited. In one example, the molar ratio is 4.5% or more and 7% or less. It is known that when a cold storage material in which the molar ratio of tetrahydrofuran to water is 1/17 is cooled, the water and the tetrahydrofuran form a clathrate hydrate crystal with no excess nor shortage of the water and the tetrahydrofuran.

The cold storage material according to the first embodiment may include an additive other than the tetrahydrofuran, the water, and the halogenated hydrocarbon.

Examples of the additive include a supercooling inhibitor, a thickener, and an antiseptic agent.

Examples of the supercooling inhibitor include a silver compound. The silver compound used as the supercooling inhibitor for the cold storage material according to the first embodiment is, for example, at least one selected from the group consisting of silver phosphate represented by a chemical formula Ag₃PO₄, silver carbonate represented by a chemical formula Ag₂CO₃, and silver oxide represented by a chemical formula AgO. Two or more of the silver compounds may be used. In the cold storage material according to the first embodiment, a molar ratio of the silver compound to the water is desirably 2.64 × 10⁻⁶ or more and 3.70 × 10⁻² or less.

A ratio (hereinafter simply referred to as "silver compound mass ratio") of a mass of the silver compound to a sum of a mass of the water, a mass of the tetrahydrofuran, and a mass of the halogenated hydrocarbon included in the cold storage material according to the first embodiment is desirably 0.00050 or more and 0.020 or less. For example, in later-described Example 1A-2 to Example 1A-4, Example 1B-2 to Example 1B-4, Example 1C-2 to Example 1C-4, Example 2A-2 to Example 2A-4, Example 2B-2 to Example 2B-4, Example 2C-2 to Example 2C-4, Example 3A-2 to Example 3A-4, Example 3B-2 to Example 3B-4, and Example 3C-2 to Example 3C-4, the ratio (namely, the silver compound mass ratio) of the mass (0.02 g) of the silver compound to the sum (2.00g) of the mass of the water, the mass of the tetrahydrofuran, and the mass of the halogenated hydrocarbon is 0.010. In later-described Example 1A-5 to Example 1A-7, the silver compound mass ratio is 0.0010. The silver compound mass ratio is desirably 0.0010 or more and 0.010 or less.

The supercooling inhibitor improves the crystallization temperature of the cold storage material according to the first embodiment. Specifically, when being free of the supercooling inhibitor, the cold storage material according to the first embodiment has a crystallization temperature of approximately minus 20 degrees Celsius. On the other hand, when being free of the supercooling inhibitor, the cold storage material according to the first embodiment can have a crystallization temperature of 0 degrees Celsius or higher and 5 degrees Celsius or lower. In one example, when being free of the supercooling inhibitor, the cold storage material according to the first embodiment has a crystallization temperature of 1 degrees Celsius or higher and 3 degrees Celsius or lower.

The cold storage material according to the first embodiment may be free of the additive. In other words, the cold storage material according to the first embodiment may consist of the tetrahydrofuran, the water, and the halogenated hydrocarbon.

The cold storage material according to the first embodiment can be produced by mixing the tetrahydrofuran, the water, and the halogenated hydrocarbon.

Specific applications of the cold storage material according to the first embodiment will be described hereinafter.

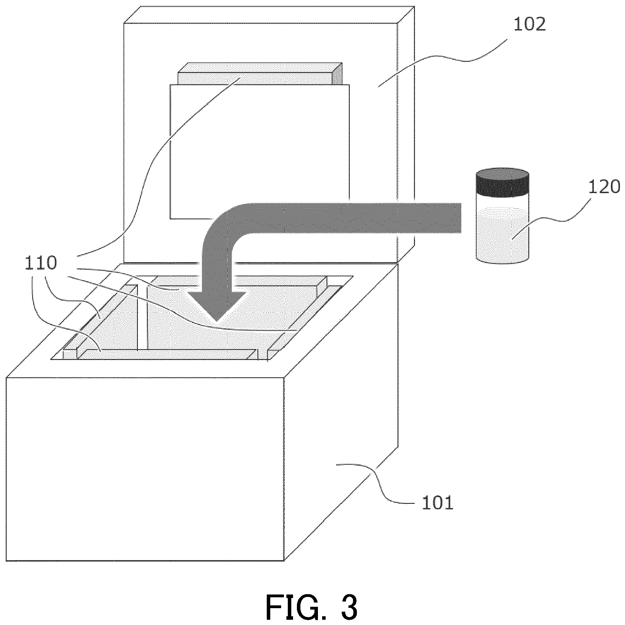

FIG. 3 shows a schematic diagram of a cooler box 100 according to the first embodiment.

The cooler box 100 includes: a thermal insulation box 101 having a bottom (not illustrated) and a side wall; and a thermal insulation lid 102.

The cold storage material according to the first embodiment is provided on at least one selected from the group consisting of an inner face of the bottom of the thermal insulation box 101, an inner face of the side wall of the thermal insulation box 101, and an inner face (namely, an undersurface) of the thermal insulation lid 102. In FIG. 3, a cold storage material pack 110 including the cold storage material according to the first embodiment is provided in contact with each of four inner side walls of the thermal insulation box 101 having a rectangular parallelepiped shape.

The cold storage material according to the first embodiment may be provided inside of at least one selected from the group consisting of the bottom of the thermal insulation box 101, the side wall of the thermal insulation box 101, and the thermal insulation lid 102. The cold storage material according to the first embodiment may be held in the form of the cold storage material pack 110 inside an interior space (namely, a space defined by the inner face of the bottom of the thermal insulation box 101, the inner face of the side wall of the thermal insulation box 101, and the inner face of the thermal insulation lid 102) of the cooler box 100.

The cold storage material according to the first embodiment may be provided inside at least one selected from the group consisting of the side wall of the thermal insulation box, the thermal insulation lid of the thermal insulation box, and the thermal insulation box as a whole. In this case as well, the cold storage material according to the first embodiment may be provided in the form of the cold storage material pack 110.

It is desirable that at least one selected from the group consisting of medicine and food be put into the thermal insulation box 101. According to FIG. 3, a medicine 120 is put into the thermal insulation box 101. Examples of the medicine include liquid medicines. Examples of the liquid medicines include vaccines. Since the cold storage material according to the first embodiment has low inflammability, vaccines are safely carried using a cooler box including the cold storage material according to the first embodiment.

### EXAMPLES

The present invention will be described in more details with reference to examples below.

Tetrahydrofuran is abbreviated as "THF" in examples of the present disclosure. The THF was purchased from Tokyo Chemical Industry Co., Ltd.

### (Example 1A-1)

### (Cold storage material production method)

First, the reagents shown in Table 1 below were added into a 9-milliliter screw tube to obtain a mixture. The mixture was sufficiently stirred inside the screw tube to obtain a cold storage material according to Example 1A-1. The screw tube was a glass tube having a lid with a screw.

**[Table 1]**

| Reagent | Amount |
|---|---|
| Mixture of (E)-1-chloro-2,3,3-trifluoropropene and (Z)-1-chloro-2,3,3-trifluoropropene | 0.2 g (10 weight%) |
| THF | 0.343 g |
| Pure water | 1.457 g |

The mixture (chemical formula: CF₂CF=CHCl; boiling point: 54 degrees Celsius) of (E)-1-chloro-2,3,3-trifluoropropene and (Z)-1-chloro-2,3,3-trifluoropropene was purchased from AGC Inc. under the product name of "AS-300", the mixture being a type of halogenated hydrocarbon.

### (Measurement of melting point, crystallization temperature, and latent heat)

### (Measurement experiment)

The heat storage material composition (about 2 milliliters) according to Example 1A-1 was put into a container (obtained from PerkinElmer, Inc.; product name: 02192005). The container was set in a differential scanning calorimeter (obtained from PerkinElmer, Inc.; product name: DSC-8500). The cold storage material inside the container was cooled from an ordinary temperature down to minus 30 degrees Celsius at a rate of 0.5 degrees Celsius/minute, and was then allowed to stand still at minus 30 degrees Celsius for 5 minutes so as to be crystalized. The ordinary temperature was in the range of 20 degrees Celsius to 26 degrees Celsius. In the course of the cooling, the present inventor observed spontaneous crystallization of the cold storage material according to Example 1A-1 at minus 20 degrees Celsius.

The crystallized cold storage material was warmed from minus 30 degrees Celsius to 30 degrees Celsius at a rate of 1.0 degrees Celsius/minute. The crystallized cold storage material was thereby molten. The temperature of the cold storage material according to Example 1A-1 in a constant-temperature chamber was recorded using a thermocouple and a data logger (manufactured by Keyence Corporation; product name: NR-600). The melting point and the latent heat of the cold storage material according to Example 1A-1 were measured using a differential scanning calorimeter (product name: DSC-8500). From an endothermic peak output from the DSC during the melting of the cold storage material according to Example 1A-1, the melting point of the cold storage material according to Example 1A-1 was determined and the latent heat of the cold storage material according to Example 1A-1 was calculated. This revealed that the melting point of the cold storage material according to Example 1A-1 was 5 degrees Celsius. The latent heat of the cold storage material according to Example 1A-1 was 225 joules per gram.

### (Inflammability test)

The total amount of the cold storage material according to Example 1A-1 (about 2 ml) was put in a special metal cup of a Setaflash closed cup flash point measurement apparatus (manufactured by Tanaka Scientific Limited; product name: automated flash point tester asc-8c; hereinafter simply referred to as "apparatus"). The inside of an enclosed space containing the special metal cup was provided with a platinum resistance thermometer (Pt100) so that a temperature rise caused by catching fire from an ignition source can be detected. After a setting temperature is reached and maintained for 1 minute, the present inventor slightly opened a lid of the apparatus and brought an ignition source near to the opening to check whether the cold storage material according to Example 1A-1 catches fire or not. Whether the cold storage material catches fire or not was checked in an ascending order in the temperature range from 10 degrees Celsius to 130 degrees Celsius. If the cold storage material did not catch fire, the temperature inside the apparatus was increased by 5 degrees Celsius and then whether the cold storage material catches fire or not was checked. If the cold storage material caught fire, the temperature was decreased by 5 degrees Celsius and then whether the cold storage material catches fire or not was checked. The above was repeated to find the highest temperature at which the cold storage material does not catch fire. After that, the setting temperature was increased from the highest temperature at which the cold storage material does not catch fire at an interval of 1.0 degree Celsius to find the flash point.

In the case of measuring the flash point in the temperature range of 100 degrees Celsius or higher, two screw tubes of the cold storage material (about 4 ml) were introduced. The setting temperature was maintained for 2 minutes after reached.
Then, whether the cold storage material catches fire or not was checked in the same manner as described above.

The cold storage material according to Example 1A-1 in the enclosed space of the apparatus was held at 10 degrees Celsius for 1 minute, and then whether the cold storage material catches fire or not was checked in the same manner as described above. After that, the temperature of the enclosed space was increased in increments of one degree Celsius. Each temperature was maintained for one minute after reached. Whether the cold storage material catches fire or not was then checked. Checking whether the cold storage material catches fire or not was repeated until the cold storage material's catching fire was observed or until the cold storage material's catching fire was not observed and the temperature inside the apparatus (namely, the temperature of the enclosed space) reached 130 degrees Celsius. The inflammability test was repeated 20 times. In the inflammability test of Example 1A-1, the number of times the cold storage material's catching fire was observed is 0 times.

### (Example 1A-2)

In Example 1A-2, silver(II) oxide (chemical formula: AgO; obtained from FUJIFILM Wako Pure Chemical Corporation under the product name of "Silver (II) Oxide"; 0.02 grams) was added to the heat storage material composition (about 2 milliliters) according to Example 1A-1 to obtain a cold storage material according to Example 1A-2. The cold storage material according to Example 1A-2 was subjected to the same experiment as for Example 1A-1.

### (Example 1A-3)

In Example 1A-3, the same experiment as in Example 1A-2 was performed except that silver phosphate (obtained from Mitsuwa Chemicals Co., Ltd. under the product name of "Silver(I) Phosphate"; 0.02 grams) was used instead of silver(II) oxide.

### (Example 1A-4)

In Example 1A-4, the same experiment as in Example 1A-2 was performed except that silver carbonate (obtained from FUJIFILM Wako Pure Chemical Corporation under the product name of "Silver Carbonate"; 0.02 grams) was used instead of silver(II) oxide.

### (Example 1A-5)

In Example 1A-5, the same experiment as in Example 1A-2 was performed except that the mass of the silver(II) oxide used was 0.002 grams.

### (Example 1A-6)

In Example 1A-6, the same experiment as in Example 1A-3 was performed except that the mass of the silver phosphate used was 0.002 grams.

### (Example 1A-7)

In Example 1A-7, the same experiment as in Example 1A-4 was performed except that the mass of the silver carbonate used was 0.002 grams.

### (Example 1B-1 to Example 1D and Reference Example 1)

In Example 1B-1, Example 1C-1, Example 1D, and Reference Example 1, as shown in Table 2A, the same experiment as in Example 1A-1 was performed except that the amount of the halogenated hydrocarbon added for each cold storage material was different from that in Example 1A-1.

### (Example 1B-2 to Example 1B-4)

In Example 1B-2 to Example 1B-4, as shown in Table 2A, the silver(II) oxide, the silver phosphate, and the silver carbonate (0.02 grams), respectively, were added to the cold storage material according to Example 1B-1, and the same experiment as in Example 1A-1 was performed.

### (Example 1C-2 to Example 1C-4)

In Example 1C-2 to Example 1C-4, as shown in Table 2A, the silver(II) oxide, the silver phosphate, and the silver carbonate (0.02 grams), respectively, were added to the cold storage material according to Example 1C-1, and the same experiment as in Example 1A-1 was performed.

### (Example 2A-1 to Example 3D, Reference Example 2, and Reference Example 3)

In Examples 2A-1, 2B-1, 2C-1, 2D, 3A-1, 3B-1, 3C-1, 3D, Reference Example 2, and Reference Example 3, as shown in Tables 2A and 3A, the same experiment as in Example 1A-1 or Reference Example 1 was performed except that the type and the amount of the halogenated hydrocarbon added for each cold storage material were different from those in Example 1A-1 and Reference Example 1.

In Examples 2A-1, 2B-1, 2C-1, 2D, and Reference Example 2, as shown in Table 2A, (Z)-1,1,1,4,4,4-hexafluorobut-2-ene (chemical formula: Cis-CF₃CH=CHCF₃; boiling point: 33 degrees Celsius) was purchased from Chemours-Mitsui Fluorochemical Co., Ltd. under the product name of "Opteon SF33" as the halogenated hydrocarbon.

In Examples 3A-1, 3B-1, 3C-1, 3D, and Reference Example 3, as shown in Table 3A, (Z)-1-chloro-3,3,3-trifluoropropene (chemical formula: CF₃CH=CHCl; boiling point: 39 degrees Celsius) was purchased from Central Glass Co., Ltd. under the product name of "CELEFIN 1233Z" as the halogenated hydrocarbon.

### (Example 2A-2 to Example 2A-4)

In Example 2A-2 to Example 2A-4, as shown in Table 2A, the silver(II) oxide, the silver phosphate, and the silver carbonate (0.02 grams), respectively, were added to the cold storage material according to Example 2A-1 and the same experiment as in Example 1A-1 was performed.

### (Example 2B-2 to Example 2B-4)

In Example 2B-2 to Example 2B-4, as shown in Table 2A, the silver(II) oxide, the silver phosphate, and the silver carbonate (0.02 grams), respectively, were added to the cold storage material according to Example 2B-1, and the same experiment as in Example 1A-1 was performed.

### (Example 2C-2 to Example 2C-4)

In Example 2C-2 to Example 2C-4, as shown in Table 2A, the silver(II) oxide, the silver phosphate, and the silver carbonate (0.02 grams), respectively, were added to the cold storage material according to Example 2C-1, and the same experiment as in Example 1A-1 was performed.

### (Example 3A-2 to Example 3A-4)

In Example 3A-2 to Example 3A-4, as shown in Table 3A, the silver(II) oxide, the silver phosphate, and the silver carbonate (0.02 grams), respectively, were added to the cold storage material according to Example 3A-1, and the same experiment as in Example 1A-1 was performed.

### (Example 3B-2 to Example 3B-4)

In Example 3B-2 to Example 3B-4, as shown in Table 3A, the silver(II) oxide, the silver phosphate, and the silver carbonate (0.02 grams), respectively, were added to the cold storage material according to Example 3B-1, and the same experiment as in Example 1A-1 was performed.

### (Example 3C-2 to Example 3C-4)

In Example 3C-2 to Example 3C-4, as shown in Table 3A, the silver(II) oxide, the silver phosphate, and the silver carbonate (0.02 grams), respectively, were added to the cold storage material according to Example 3C-1, and the same experiment as in Example 1A-1 was performed.

### (Comparative Examples 1 to 15)

In Comparative Examples 1 to 15, as shown in Tables 3A and 4, the same experiment as in Example 1A-1 was performed except that a halogenated hydrocarbon different from that in Example 1A-1 was added for each cold storage material.

As shown in Table 3A, 1,1,1,2,3,4,4,5,5,5-decafluoro-3-methoxy-2-(trifluoromethyl)pentane (chemical formula: C₂F₅CF(OCH₃)C₃F₇; purchased from 3M Japan Limited under the product name of Novec 7300) was used in Comparative Example 1 as the halogenated hydrocarbon.

As shown in Table 3A, ethyl nonafluorobutyl ether (chemical formula: C₄F₉OC₂H₅; purchased from 3M Japan Limited under the product name of N-7200) was used in Comparative Example 2 as the halogenated hydrocarbon.

As shown in Table 3A, 1,1,2,2,3,3,4-heptafluorocyclopentane (chemical formula: cyclo-C₅F₇H₃; purchased from Zeon Corporation under the product name of ZEORORA H) was used in Comparative Example 3 as the halogenated hydrocarbon.

As shown in Table 3A, methyl nonafluorobutyl ether (chemical formula: C₄F₉OCH₃; purchased from 3M Japan Limited under the product name of Novec 7100) was used in Comparative Example 4 as the halogenated hydrocarbon.

As shown in Table 4, methoxy perfluoroheptene (chemical formula: CF₃CF=CFCF(OCH₃)C₃F₇; purchased from Chemours-Mitsui Fluorochemical Co., Ltd. under the product name of Opteon SF10) was used in Comparative Examples 5 and 6 as the halogenated hydrocarbon.

As shown in Table 4, 1,1,1,2,2,3,3,4,4,5,5,6,6-tridecafluorooctane (chemical formula: CF₃CF₂CF₂CF₂CF₂CF₂CH₂CH₃; purchased from AGC Inc. under the product name of AC-6000) was used in Comparative Examples 7 and 8 as the halogenated hydrocarbon.

As shown in Table 4, 1,1,1,2,3,4,4,5,5,5-decafluoro-3-methoxy-2-(trifluoromethyl)pentane (chemical formula: C₂F₅CF(OCH₃)C₃F₇; purchased from 3M Japan Limited under the product name of Novec 7300) was used in Comparative Examples 9 and 10 as the halogenated hydrocarbon.

As shown in Table 4, ethyl nonafluorobutyl ether (chemical formula: C₄F₉OC₂H₅; purchased from 3M Japan Limited under the product name of Novec 7200) was used in Comparative Examples 11 and 12 as the halogenated hydrocarbon.

As shown in Table 4, 1,1,2,2,3,3,4-heptafluorocyclopentane (chemical formula: cyclo-C₅F₇H₃; purchased from Zeon Corporation under the product name of ZEORORA H) was used in Comparative Examples 13 and 14 as the halogenated hydrocarbon.

As shown in Table 4, methyl nonafluorobutyl ether (chemical formula: C₄F₉OCH₃; purchased from 3M Japan Limited under the product name of Novec 7100) was used in Comparative Example 15 as the halogenated hydrocarbon.

Tables 2A to 4 show the amounts of the components added and the experiment results for Examples 1A-1 to 3D, Reference Examples 1 to 3, and Comparative Examples 1 to 15. A molar ratio Mₜ/M_{w} is a molar ratio of the THF to the water. The molar ratio Mₛ/M_{w} is a molar ratio of the supercooling inhibitor to the water. A mass ratio mₛ/m_{wth} is a ratio of the mass of the supercooling inhibitor to the sum of the mass of the water, the mass of the THF, and the mass of the halogenated hydrocarbon.

**[Table 2A]**

| | Halogenated hydrocarbon (g) | | | THF | Pure water | Molar ratio Mₜ/M_{w} | Supercooling inhibitor | Molar ratio Mₛ/M_{w} | Mass ratio mₛ/m_{wth} |
|---|---|---|---|---|---|---|---|---|---|
| | | 9 | wt% | 9 | 9 | | | | |
| Example 1A-1 | | 0.2 | 10 | 0.343 | 1.457 | 5.9% | N/A | 0 | 0 |
| Example 1A-2 | | 0.2 | 9.90 | 0.343 | 1.457 | 5.9% | AgO (0.02 g) | 2.00E-03 | 0.01 |
| Example 1A-3 | | 0.2 | 9.90 | 0.343 | 1.457 | 5.9% | Ag₃PO₄ (0.02 g) | 5.91E-04 | 0.01 |
| Example 1A-4 | | 0.2 | 9.90 | 0.343 | 1.457 | 5.9% | Ag₂CO₃ (0.02 g) | 8.97E-04 | 0.01 |
| Example 1A-5 | | 0.2 | 9.99 | 0.343 | 1.457 | 5.9% | AgO (0.002g) | 2.00E-04 | 0.001 |
| Example 1A-6 | | 0.2 | 9.99 | 0.343 | 1.457 | 5.9% | Ag₃PO₄ (0.002g) | 5.91E-05 | 0.001 |
| Example 1A-7 | (E)-1-Chloro-2,3,3-trifluoropropene + (Z)-1-Chloro-2,3,3-trifluoropropene | 0.2 | 9.99 | 0.343 | 1.457 | 5.9% | Ag₂CO₃ (0.002g) | 8.97E-05 | 0.001 |
| Example 1B-1 | | 0.1 | 5 | 0.362 | 1.538 | 5.9% | N/A | 0 | 0 |
| Example 1B-2 | | 0.1 | 4.95 | 0.362 | 1.538 | 5.9% | AgO (0.02 g) | 1.89E-03 | 0.01 |
| Example 1B-3 | | 0.1 | 4.95 | 0.362 | 1.538 | 5.9% | Ag₃PO₄ (0.02 g) | 5.60E-04 | 0.01 |
| Example 1B-4 | | 0.1 | 4.95 | 0.362 | 1.538 | 5.9% | Ag₂CO₃ (0.02 g) | 8.50E-04 | 0.01 |
| Example 1C-1 | | 0.06 | 3 | 0.370 | 1.570 | 5.9% | N/A | 0 | 0 |
| Example 1C-2 | | 0.06 | 2.97 | 0.370 | 1.570 | 5.9% | AgO (0.02 g) | 1.85E-03 | 0.01 |
| Example 1C-3 | | 0.06 | 2.97 | 0.370 | 1.570 | 5.9% | Ag₃PO₄ (0.02 g) | 5.48E-04 | 0.01 |
| Example 1C-4 | | 0.06 | 2.97 | 0.370 | 1.570 | 5.9% | Ag₂CO₃ (0.02 g) | 8.32E-04 | 0.01 |
| Example 1D | | 0.3 | 15 | 0.324 | 1.376 | 5.9% | N/A | 0 | 0 |
| Reference Example 1 | | 0.4 | 20 | 0.305 | 1.295 | 5.9% | N/A | 0 | 0 |
| Example 2A-1 | | 0.2 | 10 | 0.343 | 1.457 | 5.9% | N/A | 0 | 0 |
| Example 2A-2 | | 0.2 | 9.9 | 0.343 | 1.457 | 5.9% | AgO (0.02 g) | 2.00E-03 | 0.01 |
| Example 2A-3 | (Z)-1,1,1,4,4,4-Hexafluorobut-2-ene | 0.2 | 9.9 | 0.343 | 1.457 | 5.9% | Ag₃PO₄ (0.02 g) | 5.91E-04 | 0.01 |
| Example 2A-4 | | 0.2 | 9.9 | 0.343 | 1.457 | 5.9% | Ag₂CO₃ (0.02 g) | 8.97E-04 | 0.01 |
| Example 2B-1 | | 0.1 | 5 | 0.362 | 1.538 | 5.9% | N/A | 0 | 0 |
| Example 2B-2 | | 0.1 | 4.95 | 0.362 | 1.538 | 5.9% | AgO (0.02 g) | 1.89E-03 | 0.01 |
| Example 2B-3 | | 0.1 | 4.95 | 0.362 | 1.538 | 5.9% | Ag₃PO₄ (0.02 g) | 5.60E-04 | 0.01 |
| Example 2B-4 | | 0.1 | 4.95 | 0.362 | 1.538 | 5.9% | Ag₂CO₃ (0.02 g) | 8.50E-04 | 0.01 |
| Example 2C-1 | | 0.06 | 3 | 0.370 | 1.570 | 5.9% | N/A | 0 | 0 |
| Example 2C-2 | | 0.06 | 2.97 | 0.370 | 1.570 | 5.9% | AgO (0.02 g) | 1.85E-03 | 0.01 |
| Example 2C-3 | | 0.06 | 2.97 | 0.370 | 1.570 | 5.9% | Ag₃PO₄ (0.02 g) | 5.48E-04 | 0.01 |
| Example 2C-4 | | 0.06 | 2.97 | 0.370 | 1.570 | 5.9% | Ag₂CO₃ (0.02 g) | 8.32E-04 | 0.01 |
| Example 2D | | 0.3 | 15 | 0.324 | 1.376 | 5.9% | N/A | 0 | 0 |
| Reference Example 2 | | 0.4 | 20 | 0.305 | 1.295 | 5.9% | N/A | 0 | 0 |

**[Table 2B]**

| | Boiling point °C | Inflammability | Latent heat | Melting point | Crystallization temperature |
|---|---|---|---|---|---|
| | | | J/g | °C | °C |
| Example 1A-1 | 54 | 0/20 | 225 | 5 | -20 |
| Example 1A-2 | | 0/20 | 223 | 5 | 2 |
| Example 1A-3 | | 0/20 | 223 | 5 | 2 |
| Example 1A-4 | | 0/20 | 223 | 5 | 1 |
| Example 1A-5 | | 0/20 | 225 | 5 | 2 |
| Example 1A-6 | | 0/20 | 225 | 5 | 2 |
| Example 1A-7 | | 0/20 | 225 | 5 | 1 |
| Example 1B-1 | | 1/20 | 238 | 5 | -20 |
| Example 1B-2 | | 1/20 | 235 | 5 | 2 |
| Example 1B-3 | | 1/20 | 235 | 5 | 2 |
| Example 1B-4 | | 1/20 | 235 | 5 | 1 |
| Example 1C-1 | | 3/20 | 243 | 5 | -20 |
| Example 1C-2 | | 3/20 | 240 | 5 | 2 |
| Example 1C-3 | | 3/20 | 240 | 5 | 2 |
| Example 1C-4 | | 3/20 | 240 | 5 | 1 |
| Example 1D | | 0/20 | 213 | 5 | -20 |
| Reference Example 1 | | 0/20 | 200 | 5 | -20 |
| Example 2A-1 | 33 | 0/20 | 225 | 5 | -20 |
| Example 2A-2 | | 0/20 | 223 | 5 | 2 |
| Example 2A-3 | | 0/20 | 223 | 5 | 2 |
| Example 2A-4 | | 0/20 | 223 | 5 | 1 |
| Example 2B-1 | | 0/20 | 238 | 5 | -20 |
| Example 2B-2 | | 0/20 | 235 | 5 | 2 |
| Example 2B-3 | | 0/20 | 235 | 5 | 2 |
| Example 2B-4 | | 0/20 | 235 | 5 | 1 |
| Example 2C-1 | | 2/20 | 243 | 5 | -20 |
| Example 2C-2 | | 2/20 | 240 | 5 | 2 |
| Example 2C-3 | | 2/20 | 240 | 5 | 2 |
| Example 2C-4 | | 2/20 | 240 | 5 | 1 |
| Example 2D | | 0/20 | 213 | 5 | -20 |
| Reference Example 2 | | 0/20 | 200 | 5 | -20 |

**Table 3A**

| | Halogenated hydrocarbon (g) | | | THF | Pure water | Molar ratio Mₜ/M_{w} | Supercooling inhibitor | Molar ratio Mₛ/M_{w} | Mass ratio Mₛ/M_{wth} |
|---|---|---|---|---|---|---|---|---|---|
| | | 9 | wt% | 9 | 9 | | | | |
| Example 3A-1 | (Z)-1-Chloro-3,3,3-trifluoropropene | 0.2 | 10 | 0.343 | 1.457 | 5.9% | N/A | 0 | 0 |
| Example 3A-2 | | 0.2 | 9.9 | 0.343 | 1.457 | 5.9% | AgO (0.02 g) | 2.00E-03 | 0.01 |
| Example 3A-3 | | 0.2 | 9.9 | 0.343 | 1.457 | 5.9% | Ag₃PO₄ (0.02 g) | 5.91E-04 | 0.01 |
| Example 3A-4 | | 0.2 | 9.9 | 0.343 | 1.457 | 5.9% | Ag₂CO₃ (0.02 g) | 8.97E-04 | 0.01 |
| Example 3B-1 | | 0.1 | 5 | 0.362 | 1.538 | 5.9% | N/A | 0 | 0 |
| Example 3B-2 | | 0.1 | 4.95 | 0.362 | 1.538 | 5.9% | AgO (0.02 g) | 1.89E-03 | 0.01 |
| Example 3B-3 | | 0.1 | 4.95 | 0.362 | 1.538 | 5.9% | Ag₃PO₄ (0.02 g) | 5.60E-04 | 0.01 |
| Example 3B-4 | | 0.1 | 4.95 | 0.362 | 1.538 | 5.9% | Ag₂CO₃ (0.02 g) | 8.50E-04 | 0.01 |
| Example 3C-1 | | 0.06 | 3 | 0.370 | 1.570 | 5.9% | N/A | 0 | 0 |
| Example 3C-2 | | 0.06 | 2.97 | 0.370 | 1.570 | 5.9% | AgO (0.02 g) | 1.85E-03 | 0.01 |
| Example 3C-3 | | 0.06 | 2.97 | 0.370 | 1.570 | 5.9% | Ag₃PO₄ (0.02 g) | 5.48E-04 | 0.01 |
| Example 3C-4 | | 0.06 | 2.97 | 0.370 | 1.570 | 5.9% | Ag₂CO₃ (0.02 g) | 8.32E-04 | 0.01 |
| Example 3D | | 0.3 | 15 | 0.324 | 1.376 | 5.9% | N/A | 0 | 0 |
| Reference Example 3 | | 0.4 | 20 | 0.305 | 1.295 | 5.9% | N/A | 0 | 0 |
| Comparative Example 1 | 1,1,1,2,3,4,4,5,5,5-Decafluoro-3-methoxy-2-(trifluoromethyl) pentane | 0.6 | 30 | 0.267 | 1.133 | 5.9% | N/A | 0 | 0 |
| Comparative Example 2 | Ethyl nonafluorobutyl ether | 0.6 | 30 | 0.267 | 1.133 | 5.9% | N/A | 0 | 0 |
| Comparative Example 3 | 1,1,2,2,3,3,4-Heptafluorocyclopentane | 0.6 | 30 | 0.267 | 1.133 | 5.9% | N/A | 0 | 0 |
| Comparative Example 4 | Methyl nonafluorobutyl ether | 0.4 | 20 | 0.305 | 1.295 | 5.9% | N/A | 0 | 0 |

**Table 3B]**

| | Boiling point °C | inflammability | Latent heat | Melting point | Crystallization temperature |
|---|---|---|---|---|---|
| | | | J/g | °C | °C |
| Example 3A-1 | 39 | 0/20 | 225 | 5 | -20 |
| Example 3A-2 | | 0/20 | 223 | 5 | 2 |
| Example 3A-3 | | 0/20 | 223 | 5 | 2 |
| Example 3A-4 | | 0/20 | 223 | 5 | 1 |
| Example 3B-1 | | 1120 | 238 | 5 | -20 |
| Example 3B-2 | | 1120 | 235 | 5 | 2 |
| Example 3B-3 | | 1120 | 235 | 5 | 2 |
| Example 3B-4 | | 1120 | 235 | 5 | 1 |
| Example 3C-1 | | 2/20 | 243 | 5 | -20 |
| Example 3C-2 | | 2/20 | 240 | 5 | 2 |
| Example 3C-3 | | 2/20 | 240 | 5 | 2 |
| Example 3C-4 | | 2/20 | 240 | 5 | 1 |
| Example 3D | | 0/20 | 213 | 5 | -20 |
| Reference Example 3 | | 0/20 | 200 | 5 | -20 |
| Comparative Example 1 | 98 | 0/20 | 175 | 5 | -20 |
| Comparative Example 2 | 76 | 0/20 | 175 | 5 | -20 |
| Comparative Example 3 | 83 | 0/20 | 175 | 5 | -20 |
| Comparative Example 4 | 61 | 0/20 | 200 | 5 | -20 |

**Table 4]**

| | Halogenated hydrocarbon (g) | | | THF | Pure water | Boiling point of halogenated hydrocarbon °C | Inflammability | Latent heat | Melting point | Crystallization temperature | Supercooling inhibitor |
|---|---|---|---|---|---|---|---|---|---|---|---|
| | | 9 | wt% | 9 | 9 | | | J/g | °C | °C | |
| Comp. Ex. 5 | Methoxy perfluoroheptene | 0.6 | 30 | 0.267 | 1.133 | 110 | 4/20 | 175 | 5 | -20 | N/A |
| Comp. Ex. 6 | Methoxy perfluoroheptene | 0.7 | 35 | 0.248 | 1.052 | 110 | 0/20 | 163 | 5 | -20 | N/A |
| Comp. Ex. 7 | 1,1,1,2,2,3,3,4,4,5,5,6,6-Tridecafluorooctane | 0.6 | 30 | 0.267 | 1.133 | 115 | 5/20 | 175 | 5 | -20 | N/A |
| Comp. Ex. 8 | 1,1,1,2,2,3,3,4,4,5,5,6,6-Tridecafluorooctane | 0.7 | 35 | 0.248 | 1.052 | 115 | 0/20 | 163 | 5 | -20 | N/A |
| Comp. Ex. 9 | 1,1,1,2,3,4,4,5,5,5-Decafluoro-3-methoxy-2-(trifluoromethyl) pentane | 0.7 | 35 | 0.248 | 1.052 | 98 | 0/20 | 163 | 5 | -20 | N/A |
| Comp. Ex. 10 | 1,1,1,2,3,4,4,5,5,5-Decafluoro-3-methoxy-2-(trifluoromethyl)pentane | 0.5 | 25 | 0.286 | 1.214 | 98 | 4/20 | 188 | 5 | -20 | N/A |
| Comp. Ex. 11 | Ethyl nonafluorobutyl ether | 0.7 | 35 | 0.248 | 1.052 | 76 | 0/20 | 163 | 5 | -20 | N/A |
| Comp. Ex. 12 | Ethyl nonafluorobutyl ether | 0.5 | 25 | 0.286 | 1.214 | 76 | 4/20 | 188 | 5 | -20 | N/A |
| Comp. Ex. 13 | 1,1,2,2,3,3,4-Heptafluorocyclopentane | 0.7 | 35 | 0.248 | 1.052 | 83 | 0/20 | 163 | 5 | -20 | N/A |
| Comp. Ex. 14 | 1,1,2,2,3,3,4-Heptafluorocyclopentane | 0.5 | 25 | 0.286 | 1.214 | 83 | 5/20 | 188 | 5 | -20 | N/A |
| Comp. Ex. 15 | Methyl nonafluorobutyl ether | 0.3 | 15 | 0.324 | 1.376 | 61 | 4/20 | 213 | 5 | -20 | N/A |

In Tables 2B, 3B, and 4, "boiling point" means the boiling point of each halogenated hydrocarbon.

In the column "Inflammability" in Tables 2B, 2B, and 4, the denominator represents the number of times the inflammability test was repeated in the temperature range of 10 degrees Celsius or higher to 130 degrees Celsius or lower. In each of Examples 1A-1 to 3D, Reference Examples 1 to 3, and Comparative Examples 1 to 15, the number of times the inflammability test was repeated is 20 times. The numerator represents the number of times catching fire was observed in the inflammability test.

As is revealed by comparison between Examples 1A-1 to 3D and Comparative Examples 1 to 15, in the case where the boiling point of the halogenated hydrocarbon is 54 degrees Celsius or lower, the cold storage material has low inflammability even if the weight proportion of the halogenated hydrocarbon is 15 weight% or less. Specifically, of the 20 samples, the number of samples that catches fire in the temperature range of 10 degrees Celsius or higher to 130 degrees Celsius or lower is 3 or less. That is, the inflammability is 3/20 (= 15%) or less. When the weight proportion of the halogenated hydrocarbon is 5 weight% or more, the number of samples that catches fire is 1 or less of the 20 samples. That is, the inflammability is 1/20 (= 5%) or less. When the weight proportion of the halogenated hydrocarbon is 10 weight% or more, none of the 20 samples catches fire. That is, the inflammability is 0/20 (= 0%). In Examples 1A-1 to 3D, the weight proportion of the halogenated hydrocarbon is as low as 15 weight% or less; therefore, the cold storage materials according to Examples 1A-1 to 3D have a high latent heat, namely 213 J/g or more.

On the other hand, in the case where the boiling point of the halogenated hydrocarbon is 61 degrees Celsius or higher, the cold storage material where the weight proportion of the halogenated hydrocarbon is 15 weight% has a high latent heat, namely 213 J/g, but has high inflammability (refer to Comparative Example 15). On the other hand, although the cold storage material where the weight proportion of the halogenated hydrocarbon is 20 weight% has low inflammability, the latent heat thereof is reduced to 200 J/g because of the large weight proportion, namely 20 weight%, of the halogenated hydrocarbon (refer to Comparative Example 4).

In other words, as is obvious from Comparative Example 4 and Comparative Example 15, the cold storage material where the weight proportion of the halogenated hydrocarbon is 15 weight% (namely, the cold storage material according to Comparative Example 15) has high inflammability because the boiling point of the halogenated hydrocarbon is as high a temperature as 61 degrees Celsius. On the other hand, the cold storage material where the weight proportion of the halogenated hydrocarbon is 20 weight% (namely, the cold storage material according to Comparative Example 4) has low inflammability, but has a low latent heat.

As is the case for the above, as for Comparative Examples 1, 9, and 10, the cold storage material where the weight proportion of the halogenated hydrocarbon is 25 weight% (namely, the cold storage material according to Comparative Example 10) has high inflammability because the boiling point of the halogenated hydrocarbon is as high as 98 degrees Celsius, and the cold storage material has a low latent heat, namely 188 J/g,. The cold storage material where the weight proportion of the halogenated hydrocarbon is 30 weight% or more (namely, the cold storage materials according to Comparative Example 1 and 9) has low inflammability, but has a lower latent heat, namely 175 J/g or less.

Likewise, as for Comparative Examples 2, 11, and 12, the cold storage material where the weight proportion of the halogenated hydrocarbon is 25 weight% (namely, the cold storage material according to Comparative Example 12) has high inflammability because the boiling point of the halogenated hydrocarbon is as high as 76 degrees Celsius, and the cold storage material has a low latent heat, namely 188 J/g. The cold storage material where the weight proportion of the halogenated hydrocarbon is 30 weight% or more (namely, the cold storage materials according to Comparative Examples 2 and 11) has low inflammability, but has a lower latent heat, namely 175 J/g or less.

Likewise, as for Comparative Examples 3, 13, and 14, the cold storage material where the weight proportion of the halogenated hydrocarbon is 25 weight% (namely, the cold storage material according to Comparative Example 14) has high inflammability because the boiling point of the halogenated hydrocarbon is as high as 83 degrees Celsius, and the cold storage material has a low latent heat, namely 188 J/g. The cold storage material where the weight proportion of the halogenated hydrocarbon is 30 weight% or more (namely, the cold storage materials according to Comparative Examples 3 and 13) has low inflammability, but has a lower latent heat, namely 175 J/g or less.

As is obvious from Examples, Reference Examples, and Comparative Examples shown above, to obtain the following two results:
Result (I) the cold storage material has low inflammability; and
Result (II) the cold storage material has a latent heat of more than 200 J/g, the following requirements (A) to (D) need to be satisfied:
   Requirement (A) the cold storage material includes tetrahydrofuran, water, and a halogenated hydrocarbon;
   Requirement (B1) the halogenated hydrocarbon includes a fluorine atom;
   Requirement (B2) the fluorine atom is largest in number among halogen atoms in the halogenated hydrocarbon;
   Requirement (B3) the number of carbon atoms in the halogenated hydrocarbon is 3 or more and 8 or less;
   Requirement (C) the weight proportion of the halogenated hydrocarbon in the cold storage material is 15% or less (and, desirably, 3% or more); and
   Requirement (D) the halogenated hydrocarbon has a boiling point of 60 degrees Celsius or lower (desirably 54 degrees Celsius or lower).

Furthermore, as can be understood from Example 1A-2 to Example 1A-7, Example 1 B-2 to Example 1B-4, Example 1C-2 to Example 1C-4, Example 2A-2 to Example 2A-4, Example 2B-2 to Example 2B-4, Example 2C-2 to Example 2C-4, Example 3A-2 to Example 3A-4, Example 3B-2 to Example 3B-4, and Example 3C-2 to Example 3C-4, silver(II) oxide represented by the chemical formula AgO, silver phosphate represented by the chemical formula Ag₃PO₄, and silver carbonate represented by the chemical formula Ag₂CO₃ function as supercooling inhibitors suitable for the cold storage materials including the water, the tetrahydrofuran, and the halogenated hydrocarbons. As a result, the crystallization temperature of each cold storage material is improved from a low temperature, namely minus 20 degrees Celsius, to a high temperature, namely 1 degrees Celsius or higher and 2 degrees Celsius or lower.

### INDUSTRIAL APPLICABILITY

The cold storage material according to the present disclosure can be used for storage, keeping, or transportation of items that need to be kept fresh, such as medicine, living tissues, cells, food, flowers, and ornamental plants.

## Claims

1. A cold storage material comprising:
tetrahydrofuran;
water; and
a halogenated hydrocarbon, wherein
the halogenated hydrocarbon includes a fluorine atom,
the fluorine atom is largest in number among halogen atoms in the halogenated hydrocarbon,
the number of carbon atoms in the halogenated hydrocarbon is 3 or more and 8 or less,
a weight proportion of the halogenated hydrocarbon in the cold storage material is 15% or less, and
the halogenated hydrocarbon has a boiling point of 60 degrees Celsius or lower.

2. The cold storage material according to claim 1, wherein the halogenated hydrocarbon is at least one selected from the group consisting of 1-chloro-2,3,3-trifluoropropene, (Z)-1,1,1,4,4,4-hexafluorobut-2-ene, and (Z)-1-chloro-3,3,3-trifluoropropene.

3. The cold storage material according to claim 2, wherein the 1-chloro-2,3,3-trifluoropropene is a mixture of (E)-1-chloro-2,3,3-trifluoropropene and (Z)-1-chloro-2,3,3-trifluoropropene.

4. The cold storage material according to any one of claims 1 to 3, wherein the weight ratio is 2.5% or more.

5. The cold storage material according to claim 4, wherein the weight ratio is 2.97% or more.

6. The cold storage material according to claim 5, wherein the weight ratio is 4.95% or more.

7. The cold storage material according to claim 6, wherein the weight ratio is 5% or more.

8. The cold storage material according to any one of claims 1 to 7, wherein the weight ratio is 10% or less.

9. The cold storage material according to any one of claims 1 to 8, wherein the boiling point is 54 degrees Celsius or lower.

10. The cold storage material according to claim 9, wherein the boiling point is 39 degrees Celsius or lower.

11. The cold storage material according to any one of claims 1 to 10, having a latent heat of more than 200 J/g.

12. The cold storage material according to claim 11, having a latent heat of 213 J/g or more.

13. The cold storage material according to any one of claims 1 to 12, wherein a molar ratio of the tetrahydrofuran to the water is 4.5% or more and 7% or less.

14. The cold storage material according to any one of claims 1 to 13, further comprising at least one silver compound selected from the group consisting of silver phosphate represented by a chemical formula Ag₃PO₄, silver carbonate represented by a chemical formula Ag₂CO₃, and silver oxide represented by a chemical formula AgO.

15. The cold storage material according to claim 14, wherein the silver compound is the silver phosphate.

16. The cold storage material according to claim 14, wherein the silver compound is the silver carbonate.

17. The cold storage material according to claim 14, wherein the silver compound is the silver(II) oxide.

18. The cold storage material according to any one of claims 14 to 17, wherein a molar ratio of the silver compound to the water is 2.64 × 10⁻⁶ or more and 3.70 × 10⁻² or less.

19. The cold storage material according to any one of claims 14 to 18, wherein a ratio of a mass of the silver compound to a sum of a mass of the water, a mass of the tetrahydrofuran, and a mass of the halogenated hydrocarbon is 0.00050 or more and 0.020 or less.

20. The cold storage material according to claim 19, wherein the ratio of the mass of the silver compound to the sum of the mass of the water, the mass of the tetrahydrofuran, and the mass of the halogenated hydrocarbon is 0.0010 or more and 0.010 or less.
